# EUROPEAN PATENT SPECIFICATION

(11) **EP 3 029 342 B1**
(45) Date of publication and mention of the grant of the patent: **15.11.2017**
(21) Application number: 15177841.2
(22) Date of filing: 22.07.2015
(51) Int. Cl.: F16C 9/04, F16C 23/04

(54) **CONNECTING ROD FOR INTERNAL COMBUSTION ENGINE**
PLEUEL FÜR VERBRENNUNGSMOTOR
BIELLE POUR MOTEUR À COMBUSTION INTERNE

(30) Priority: 26.09.2014 JP 2014197141
(43) Date of publication of application: 08.06.2016
(73) Proprietor: Honda Motor Co., Ltd., Tokyo 107-8556 (JP)
(72) Inventor: MUKOUHARA, Hodaka, Wako-shi, Saitama 351-0193 (JP)
(74) Representative: Stevens, Jason Paul

(56) References cited:
- WO-A1-00/34696
- WO-A1-2014/126202
- DE-A1-102006 013 399
- GB-A- 2 218 752

## Description

The present invention relates to a connecting rod for an internal combustion engine.

In an internal combustion engine, a connecting rod connects a piston pin to a crankpin so that the reciprocating motion of the piston along the axis of the cylinder is converted to the rotating motion of the crankshaft. The connecting rod has a small-diameter connecting hole formed in one end (the "little end") for connection to the piston pin, and a large-diameter connecting hole formed in the other end (the "big end") for connection to the crankpin.

During operation of the internal combustion engine, a large load acts at an edge of the connecting hole of the connecting rod on a power transmitting pin such as the piston pin, the crankpin or the like. Therefore, to improve wear resistance of the power transmitting pin, a connecting rod is formed such that the inner peripheral face of a hole in the connecting rod, formed from connecting rod base material, is covered with a coating material which is softer than the connecting rod base material, by plating or the like (for example, see JP-A No. 2001-511500).

In the above-described prior art connecting rod, when a large load acts on the power transmitting pin at the edge of the connecting hole, the softer coating material applied to the connecting hole is elastically deformed, which thereby reduces the contact pressure acting on the power transmitting pin from the edge of the connecting hole.

As the engine operating speed in an internal combustion engine is increased, the power transmitting pin bends, so that the axial end of the power transmitting pin is strongly pressed against a portion around the axially outer end of the connecting hole of the connecting rod.

However, in the above-described prior art connecting rod, the inner peripheral face of the connecting hole has a constant inner diameter and is uniformly coated with the coating material. Because of this, it is difficult to efficiently reduce the pressure exerted on a portion of the power transmitting pin as a result of coming into contact with a portion around the axially outer end of the connecting hole. A connecting rod according to the preamble of claim 1 is known from document DE 10 2006 013 399 A1.

Accordingly, at least in its preferred embodiments, the present invention provides a connecting rod for an internal combustion engine enabling an efficient reduction in contact pressure exerted on a power transmitting pin from a region around an axially outer end of a connecting hole.

According to a first aspect of the present invention, there is provided a connecting rod for an internal combustion engine, comprising: a connecting hole through which a power transmitting pin is slidably fitted, the connecting hole being formed by coating an inner peripheral surface of a base material hole formed in a connecting rod base material with a coating material which is softer than the connecting rod base material, wherein the base material hole includes: a cylindrical inner surface portion with a constant inner diameter, formed in an axially central region; and a tapered inner surface portion that is continuous with an axially outer side of the cylindrical inner surface portion and is radially enlarged in an axially outward direction, and wherein the coating layer formed from the coating material includes: a first coating portion deposited on the cylindrical inner surface portion and having an inner face with an approximately constant inner diameter; and a second coating portion deposited on the tapered inner surface portion to adjoin the first coating portion and gradually increasing in material thickness in the axially outward direction.

Because the softer coating material is deposited on the tapered inner surface portion of the base material hole, and the thickness of the second coating portion continuous with the first coating portion gradually increases toward the outside in the axial direction, the cushioning effect produced by the coating material is enhanced more in an axially further outward region of the connecting hole when the power transmitting pin fitted through the connecting hole bends.

Preferably, an inner peripheral face of the second coating portion is formed continuously with an inner peripheral face of the first coating portion so as to have an approximately constant inner diameter.

In this case, when the bending of the power transmitting pin is small, the power transmitting pin can be supported across a wide extent of the first coating portion and the second coating portion. Accordingly, a reduction in contact pressure on the power transmitting pin when the bending of the power transmitting pin is small occurs.

In a further preferred form, the continuous inner peripheral face of the first coating portion and the second coating portion is formed as a removal-machined surface.

In this case, the inner peripheral surface of the first coating portion and the second coating portion can be easily and accurately formed by machining to remove coating material to provide a continuous, approximately constant inner diameter surface.

Preferably, the coating layer includes a third coating portion continuous with an axially outward side of the second coating portion and having an inner peripheral face radially enlarged in the axially outward direction.

With this arrangement, when the power transmitting pin is bent to a larger extent, a wider range of the coating layer is made to readily follow the bending of the power transmitting pin. Therefore, it is possible to further reduce the contact pressure acting on the power transmitting pin from the region around the axially outward end of the connecting hole when the bending of the power transmitting pin is large.

Preferably, the tapered inner surface portion of the base material hole has a diameter expansion rate in an axially outer region which is larger than a diameter expansion rate in an axially inner region.

In this case, the third coating portion can be easily formed on the axially outer side of the second coating portion.

In a further preferred form, the tapered inner surface portion of the base material hole is formed as a tapered surface with a plurality of stages, in which the taper angle is changed in multiple separate stages.

With this arrangement, the tapered inner surface portion of the base material hole with the varying diameter expansion rate can be readily formed by removal machining such as cutting, grinding and/or the like.

In a further preferred form, the tapered inner surface portion of the base material hole has a first tapered portion arranged adjacent to an axially outer side of the cylindrical inner surface portion, and a second tapered portion arranged adjacent to an axially outer side of the first tapered portion; and an angle which the cylindrical inner surface portion forms with the first tapered portion is set to be greater than an angle which the first tapered portion forms with the second tapered portion.

Thus, when the power transmitting pin is bent to a large extent, the power transmitting pin hardly receives a large contact pressure from the vicinity of the axially outward end of the connecting hole.

According to at least the preferred embodiments of the present invention, because the softer coating material is deposited on the tapered inner surface portion of the base material hole and the material thickness of the second coating portion adjoining the first coating portion gradually increases toward the outside in the axial direction, it is possible to efficiently reduce the contact pressure exerted on the power transmitting pin from the vicinity of the axially outer end of the connecting hole.

Preferred embodiments of the invention will now be described by way of example only and with reference to the accompanying drawings, in which:
Fig. 1 is a side view of an internal combustion engine including a connecting rod according to a first embodiment of the present invention;
Fig. 2 is a front view of a connecting rod according to the first embodiment;
Fig. 3 is a cross-sectional view taken along line III-III in Fig. 2 showing the connecting rod according to the first embodiment;
Fig. 4 is an enlarged cross-sectional view of the part IV in Fig. 3;
Fig. 5 is also an enlarged cross-sectional view of the part IV in Fig. 3;
Fig. 6 is a sequence of enlarged cross-sectional views of the part IV in Fig. 3, illustrating the process of manufacturing the connecting rod according to the first embodiment; and
Fig. 7 is an enlarged cross-sectional view of the part IV in Fig. 3 showing a connecting rod according to a second embodiment of the present invention.

Embodiments of the present invention will be described in detail below with reference to the accompanying drawings.

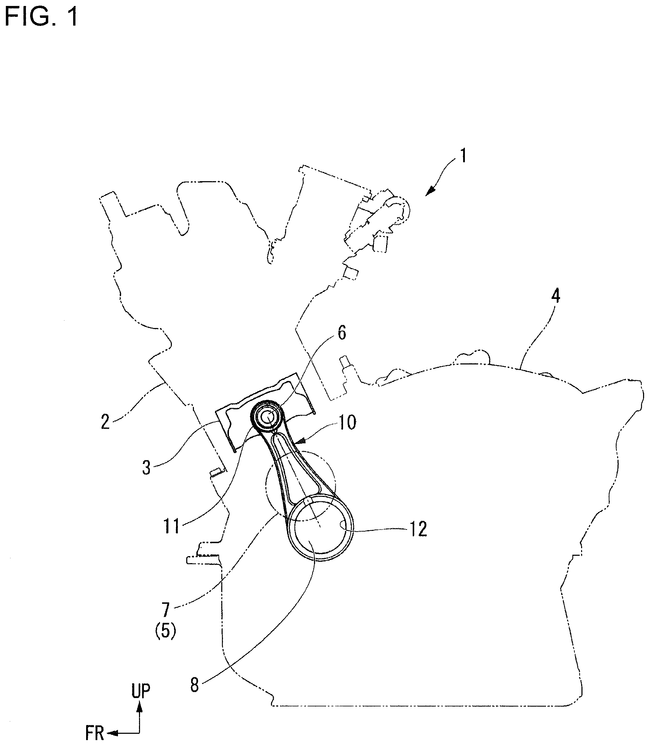

Fig. 1 is a schematic diagram of an internal combustion engine 1 which incorporates a connecting rod 10 according to the first embodiment. The internal combustion engine 1 can be used in saddle-ride type vehicles such as motorcycles and the like. In the drawings, arrow FR points in the forward direction of the vehicle in normal use, while arrow UP points in the upward direction in normal use.

As shown in Fig. 1, a piston 3 is slidably housed in a cylinder unit 2 of the internal combustion engine 1, and a crankshaft 5 is rotatably supported in a crankcase 4 below the cylinder unit 2. A piston pin 6 is mounted within the piston 3 to extend along a diametrical direction of the piston. A crankpin 8 is provided integrally with the crankshaft 5 and eccentrically to a rotating shaft 7 of the crankshaft 5. In the case of the first embodiment, the piston pin 6 constitutes a power transmitting pin.

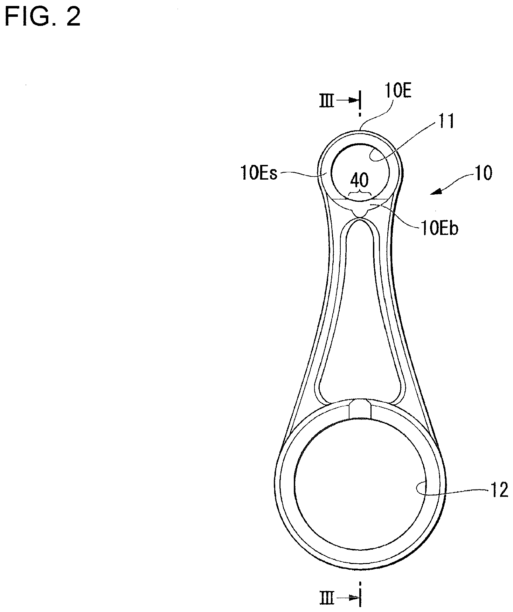

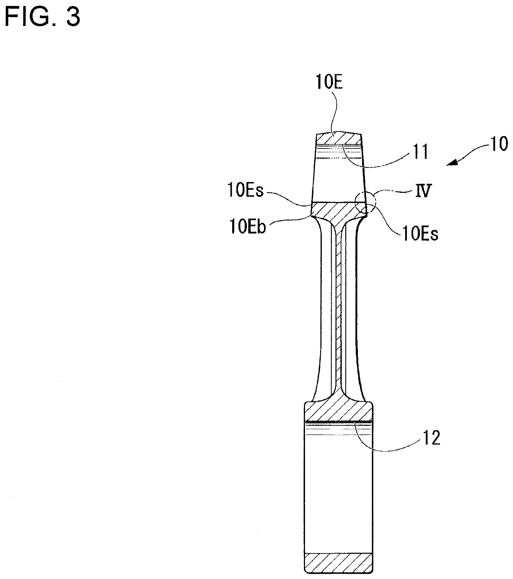

Fig. 2 and Fig. 3 are diagrams showing the connecting rod 10.

As shown in these diagrams, the connecting rod 10 has a smaller diameter connecting hole 11 formed in one end, and a larger diameter connecting hole 12 formed in the other end. The piston pin 6 is slidably fitted into the smaller diameter connecting hole 11. The crankpin 8 is slidably fitted into the larger diameter connecting hole 12. A principal part of the connecting rod 10 is formed from the connecting rod base material, which may be chromium-molybdenum steel, carbon steel, aluminium alloy and/or the like, by casting or forging.

The end of the connecting rod 10 with the smaller diameter connecting hole 11 formed in it and the other end with the larger diameter connecting hole 12 formed in it are each formed in a generally cylindrical shape, as shown in Fig. 3. However, the generally cylindrical portion with the smaller diameter connecting hole 11 formed in it is formed with a somewhat trapezoidal shape in cross-section, such that a proximal portion 10Eb (at the lower side in Fig. 3) of the connecting rod 10 has a greater width in the axial direction of the connecting hole 11 than the extended end 10E (at the upper side in Fig. 3). Accordingly, in the smaller diameter connecting hole 11, the load acting on the piston 3 during engine operation, and in particular the combustion stroke, can advantageously be received on a larger area.

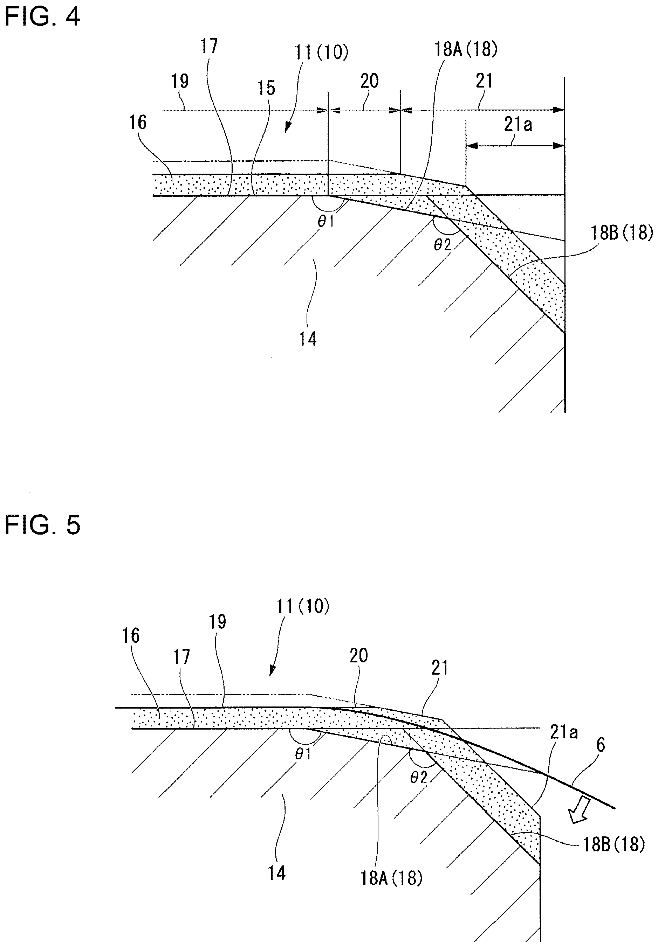

Fig. 4 and Fig. 5 are enlarged cross-sectional views of part IV of the connecting rod 10 shown in Fig. 3.

These Figures show a part of the smaller diameter connecting hole 11 of the connecting rod 10. The inner peripheral face of a base material hole 15 drilled through the connecting rod base material 14 is covered with a coating layer 16 formed of coating material by plating or the like. The coating material is softer than the connecting-rod base material 14, and may be a copper alloy or the like.

The base material hole 15 has a constant inner diameter cylindrical inner surface portion 17, which is formed in an axially central region of the hole, and a tapered inner surface portion 18 which is continuous with the axially outer end of the cylindrical inner surface portion 17 and is radially enlarged in the axially outward direction (such that the end of the hole 15 is flared). Fig. 4 and Fig. 5 only show a part of one axial end of the base material hole 15 (the right side in Fig. 3), but it will be understood that the other axial end of the base material hole 15 (the left side in Fig. 3) is of the same structure.

The tapered inner surface portion 18 of the base material hole 15 includes a first tapered portion 18A and a second tapered portion 18B, so that the taper angle is changed in a plurality of stages (more specifically, in the first embodiment, two stages). The first tapered portion 18A is arranged adjacent to the axially outer side of the cylindrical inner surface portion 17, and the second tapered portion 18B is arranged adjacent to the axially outer side of the first tapered portion 18A. The angle θ1 which the cylindrical inner surface portion 17 forms with the first tapered portion 18A is set to be greater than the angle θ2 which the first tapered portion 18A forms with the second tapered portion 18B. Therefore, the tapered inner surface portion 18 of the base material hole 15 is set so that the diameter expansion rate in the axially inner region is lower than the diameter expansion rate in the axially outer region. In the first embodiment, the tapered inner surface portion 18 of the base material hole 15 is formed of a tapered surface with a plurality of stages (two stages), so that the taper angle is changed in a number of separate stages.

In the first embodiment, the second tapered portion 18B of the tapered inner surface portion 18 is formed by chamfering, in a tapering manner, a part of the peripheral edge of the connecting hole 11 (a lower edge region in Fig. 2) on an axial end face 10Es of the extended end 10E (at the top end of the rod in Fig. 2) of the connecting rod 10 on the connecting hole 11 side, as illustrated in Fig. 2. Reference numeral 40 in Fig. 2 denotes the chamfered portion.

However, the second tapered portion 18B may be formed around the entire peripheral edge of the connecting hole 11 on the axial end face 10Es of the extended end 10E of the connecting rod 10 on the connecting hole 11 side.

The coating layer 16 has: a first coating portion 19 applied to the cylindrical inner surface portion 17, such that the inner surface has an approximately constant inner diameter; a second coating portion 20 applied to the tapered inner surface portion 18 and having a region which is contiguous with the first coating portion 19 and gradually increasing in material thickness in the axially outward direction of the hole; and a third coating portion 21 continuous with the axially outer side of the second coating portion 20, applied to the tapered inner surface portion 18 which is radially enlarged in the axially outward direction. In the case of the first embodiment, in the third coating portion 21, the inner peripheral surface is radially enlarged in two stages in the axially outward direction. Reference numeral 21a in the drawings denotes a stepped coating portion in which the inner peripheral face is radially enlarged gradually in the axially outer region of the third coating portion 21.

Note that the third coating portion 21, which is continuous with the axial outer side of the second coating portion 20, is formed to have an approximately constant material thickness over the entire range. The third coating portion 21 is applied to lie astride the first tapered portion 18A and the second tapered portion 18B of the tapered inner surface portion 18 of the base material hole 15. Therefore, while having an approximately constant thickness, the third coating portion 21 has an inner peripheral face which is gradually radially enlarged in the axially outward direction.

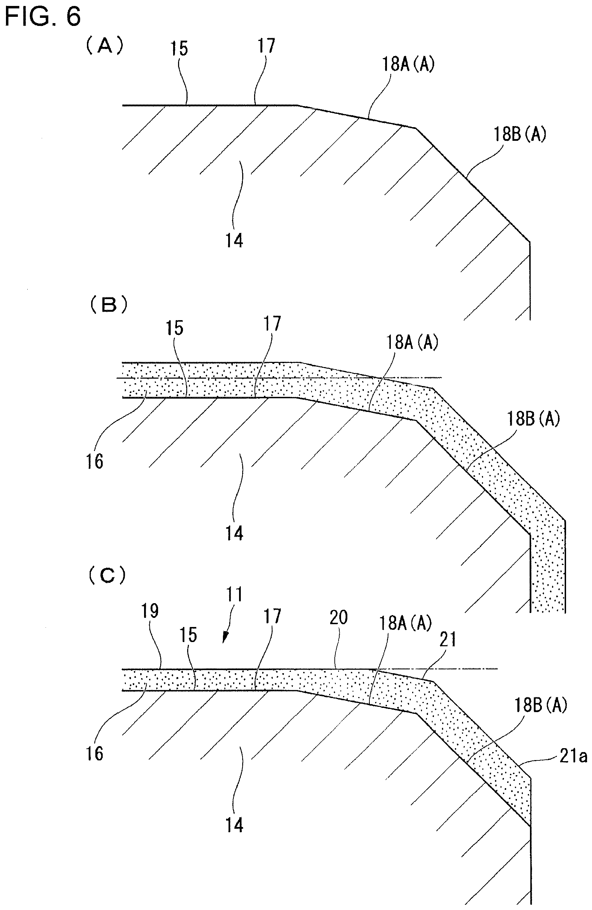

An example of how to machine the connecting hole 11 in the connecting rod 10 according to the first embodiment will now be described with reference to Fig. 6.

First, the connecting rod base material 14 is shaped by casting or forging, and then the inner surface of the base material hole 15 is machined by cutting, grinding or the like. In this stage, as illustrated in Fig. 6(A), the cylindrical inner surface portion 17 and the tapered inner surface portion 18 (the first tapered portion 18A and the second tapered portion 18B) are formed in the base material hole 15.

Then, after the machining described above, the coating material is deposited on the base material hole 15 by plating or the like, so as to have an approximately uniform thickness as illustrated in Fig. 6(B).

Then, the inner surface of the area coated with the coating material is subjected to removal machining, such as honing or the like, so that the inner surface is made approximately parallel to the cylindrical inner surface portion 17 of the base material hole 15. Thus, a predetermined thickness of the coating material deposited is removed from an axially central region of the area coated with the coating material. As a result, the portion of the coating material covering the cylindrical inner surface portion 17 has an approximately uniform thickness, while a portion of the coating material covering the tapered inner surface portion 18 includes a portion gradually increasing in material thickness in the axially outward direction, beginning with the point adjacent to the cylindrical inner surface portion 17. The portion with uniform thickness covering the cylindrical inner surface portion 17 serves as the first coating portion 19, and the portion which gradually increases in material thickness beginning with the point adjacent to the cylindrical inner surface portion 17 serves as the second coating portion 20. The unremoved portion of the coating material deposited on the tapered inner surface portion 18 serves as the third coating portion 21.

As described above, in the connecting rod 10 according to the first embodiment, the coating material (which is softer than the connecting rod base material 14) is deposited on the tapered inner surface portion 18 of the base material hole 15, and the material thickness of the coating material in the second coating portion 20 adjoining the first coating portion 19 gradually increases in the axially outward direction. For this reason, when the connecting rod 10 according to the first embodiment is used in an internal combustion engine 1, an efficient reduction in contact pressure acting on the piston pin 6 from the portion around the axially outer end of the connecting hole 11 can be achieved.

When a load acting on the piston pin 6 from the piston 3 increases, as a result of the combustion stroke during the operation of the internal combustion engine 1, this causes the axial end of the piston pin 6 to bend largely in the up-and-down direction (if the cylinder is considered to be vertical), and typically, as a result of the bending, the contact pressure acting on the piston pin 6 tends to be increasingly larger closer to the axially outermost region of the connecting hole 11. However, in the connecting rod 10 according to the first embodiment, the tapered inner surface portion 18 which is radially enlarged in the axially outward direction is formed in a position outside the cylindrical inner surface portion 17 of the base material hole 15. Further, the coating material, which is softer than the connecting rod base material 14, is deposited on the cylindrical inner surface portion 17 and the tapered inner surface portion 18, and the material thickness of the second coating portion 20 deposited on the tapered inner surface portion 18 gradually increases toward the outside in the axial direction. As a result, in the further axially outward regions of the connecting hole 11 where the contact pressure is easily increased by the bending of the piston pin 6, the cushioning effect of the coating material can be enhanced. Accordingly, in the connecting rod 10, an efficient reduction in contact pressure acting on the piston pin 6 from the region around the axially outer end of the connecting hole 11 is made possible.

Further, in the connecting rod 10 according to the first embodiment, the second coating portion 20 deposited on the tapered inner surface portion 18 is formed continuously with the first coating portion 19 so as to have an approximately constant inner diameter. Because of this, when the bending of the piston pin 6 is small, the piston pin 6 is supported across a wide extent of the first coating portion 19 and the second coating portion 20. Accordingly, by employing the connecting rod 10 according to the first embodiment, even when the bending of the piston pin 6 is small, the contact area between the piston pin 6 and the connecting hole 11 can be increased for an improvement in wear resistance property.

Further, in the connecting rod 10 according to the first embodiment, because the continuous inner peripheral face with the constant inner diameter of the first coating portion 19 and the second coating portion 20 is machined by honing and/or the like to remove material, the inner peripheral surface of the first coating portion 19 and the second coating portion 20 can be formed as a continuous approximately constant inner diameter surface with ease and accuracy.

Further, in the first embodiment, the third coating portion 21 is provided in a position axially outward of the second coating portion 20 of the coating layer 16 and has an inner peripheral face which is radially enlarged in the axially outward direction. Because of this, when the piston pin 6 largely bends in the up-and-down direction of the cylinder, a wider extent of the coating layer 16 is made to readily follow the bending of the piston pin 6. Therefore, in the first embodiment, a further advantageous reduction in contact pressure acting on the piston pin 6 from the edge of the connecting hole 11 when a large load is applied is made possible.

Further, in the connecting rod 10 according to the first embodiment, the second coating portion 20 which gradually increases in material thickness is placed outside and continuously with the first coating portion 19 of the coating layer 16 in the axial direction, and the third coating portion 21 with an approximately constant material thickness is placed outside and continuously with the second coating portion 20 in the axial direction, in such a way that the inner peripheral face is gradually radially enlarged. Because of this, as illustrated in Fig. 5, when the piston pin 6 is acted upon by a load during the combustion stroke and thus bends to a larger degree, at the beginning of the bending the amount of elastic deformation increases by degree in the second coating portion 20 with gradually increasing material thickness. Then, the amount of elastic deformation decreases bit by bit in the third coating portion 21 with an approximately constant thickness and the inner peripheral face radially enlarged in a stepwise manner. Accordingly, by employing the connecting rod 10 according to the first embodiment, changes in contact pressure applied to the piston pin 6 can be made gradual, resulting in further advantage in wear resistance of the piston pin 6.

Further, in the connecting rod 10 according to the first embodiment, the diameter expansion rate in the axially outer region of the tapered inner surface portion 18 is set to be larger than the diameter expansion rate in the axially inner region of the tapered inner surface portion 18. Because of this, the third coating portion 21 with the inner peripheral surface radially enlarged toward the outside in the axial direction can be readily formed by uniformly depositing the coating material on the tapered inner surface portion 18.

Further, in the case of the connecting rod 10 according to the first embodiment, the tapered inner surface portion 18 is formed of a tapered surface with a plurality of stages, in which the taper angle is changed in multiple separate stages. Because of this, the tapered inner surface portion 18 with varying diameter expansion rate can be easily formed by removal machining such as cutting and/or the like.

Further, in the connecting rod 10 according to the first embodiment, the tapered inner surface portion 18 has the first tapered portion 18A which is arranged adjacent to the axially outer side of the cylindrical inner surface portion 17, and the second tapered portion 18B which is arranged adjacent to the axially outer side of the first tapered portion 18A. Further, the angle θ1 which the cylindrical inner surface portion 17 forms with the first tapered portion 18A is set to be greater than the angle θ2 which the first tapered portion 18A forms with the second tapered portion 18B. As a result, in the first embodiment, when the piston pin 6 is subjected to a large load and made to bend, the piston pin 6 is less subject to large contact pressure from the region around the axial end of the connecting hole 11.

In this regard, the angle θ2 which the first tapered portion 18A forms with the second tapered portion 18B is desirably an obtuse angle. In this case, as shown in Fig. 5, when the piston pin 6 bends to come into contact with the third coating portion 21, the contact pressure acting on the piston pin 6 does not easily increase to be higher. The angle θ2 which the first tapered portion 18A forms with the second tapered portion 18B is desirably equal to or greater than 135 degrees.

Further, in the first embodiment, chamfering is performed on a part of the peripheral edge of the connecting hole 11 on the axial end face 10Es of the extended end 10E on the connecting hole 11 side of the connecting rod 10 so that the second tapered portion 18B is formed on the part of the peripheral edge by the chamfering (the chamfered portion 40). By forming the second tapered portion 18B in this manner, the second tapered portion 18B can be readily formed without sophisticated machining.

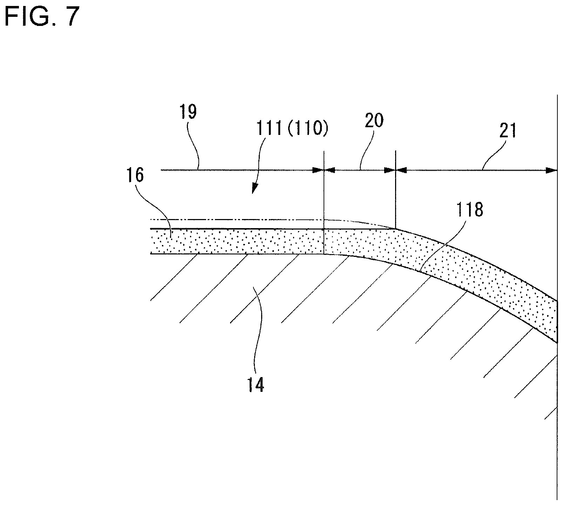

For example, in the first embodiment, the tapered inner surface portion 18 arranged adjacent to the cylindrical inner surface portion 17 of the base material hole 15 is formed in a bent manner so as to be radially enlarged toward the outside in the axial direction. However, in another embodiment illustrated in Fig. 7, a tapered inner surface portion 118 may be curved in an arc shape such that an angle change occurs smoothly from the cylindrical inner surface portion 17.

## Claims

1. A connecting rod for an internal combustion engine, comprising:
a connecting hole (11) through which a power transmitting pin (6) is slidably fitted,
the connecting hole (11) being formed by coating an inner peripheral surface of a base material hole (15) formed in a connecting rod base material (14) with a coating material which is softer than the connecting rod base material (14),
wherein the base material hole (15) includes:
a cylindrical inner surface portion (17) with a constant inner diameter, formed in an axially central region; and
wherein the coating layer (16) formed from the coating material includes:
a first coating portion (19) deposited on the cylindrical inner surface portion (17) and having an inner face with an approximately constant inner diameter **characterised in that** the base material hole (15) further includes a tapered inner surface portion (18) that is continuous with an axially outer side of the cylindrical inner portion (17) and is radially enlarged in an axially outward direction and **in that** the coating layer further includes a second coating portion (20) deposited on the tapered inner surface portion (18) to adjoin the first coating portion (19) and gradually increasing in material thickness in the axially outward direction.

2. The connecting rod for an internal combustion engine according to claim 1, wherein an inner peripheral face of the second coating portion (20) is formed continuously with an inner peripheral face of the first coating portion (19) so as to have an approximately constant inner diameter.

3. The connecting rod for an internal combustion engine according to claim 2, wherein the continuous inner peripheral face of the first coating portion (19) and the second coating portion (20) are formed by machining to remove part of the coating material.

4. The connecting rod for an internal combustion engine according to any one of claims 1 to 3, wherein the coating layer (16) includes a third coating portion (21) continuous with an axially outward side of the second coating portion (20) and having an inner peripheral face radially enlarged in the axially outward direction.

5. The connecting rod for an internal combustion engine according to any preceding claim, wherein the tapered inner surface portion (18) of the base material hole (15) has a diameter expansion rate in an axially outer region which is larger than a diameter expansion rate in an axially inner region.

6. The connecting rod for an internal combustion engine according to claim 5, wherein the tapered inner surface portion (18) of the base material hole (15) is formed as a tapered surface with a plurality of stages, in which the taper angle is changed in multiple separate stages.

7. The connecting rod for an internal combustion engine according to claim 6, wherein:
the tapered inner surface portion (18) of the base material hole (15) has a first tapered portion (18A) arranged adjacent to an axially outer side of the cylindrical inner surface portion (17), and a second tapered portion (18B) arranged adjacent to an axially outer side of the first tapered portion (18A); and
wherein an angle which the cylindrical inner surface portion (17) forms with the first tapered portion (18A) is set to be greater than an angle which the first tapered portion (18A) forms with the second tapered portion (18B).

## Patentansprüche

1. Pleuelstange für eine Verbrennungskraftmaschine, die Folgendes umfasst:
eine Verbindungsöffnung (11), durch welche ein Kraftübertragungsstift (6) verschiebbar eingebracht ist,
wobei die Verbindungsöffnung (11) durch Beschichten einer Innenumfangsfläche einer Grundwerkstofföffnung (15), die in einem Grundwerkstoff einer Pleuelstange (14) ausgebildet ist, mit einem Beschichtungswerkstoff ausgebildet ist, der weicher als der Grundwerkstoff der Pleuelstange (14) ist,
wobei die Grundwerkstofföffnung (15) Folgendes beinhaltet:
einen zylindrischen Innenoberflächenabschnitt (17) mit einem konstanten Innendurchmesser, der in einer axial mittleren Region ausgebildet ist; und
wobei die Beschichtungsschicht (16), die aus dem Beschichtungswerkstoff ausgebildet ist, Folgendes beinhaltet:
einen ersten Beschichtungsabschnitt (19), der auf dem zylindrischen Innenoberflächenabschnitt (17) abgeschieden ist und eine Innenseite mit einem ungefähr konstanten Innendurchmesser hat, **dadurch gekennzeichnet, dass** die Grundwerkstofföffnung (15) weiter einen sich verjüngenden Innenoberflächenabschnitt (18) beinhaltet, der ununterbrochen mit einer axialen Außenseite des zylindrischen Innenabschnitts (17) ist und in eine Richtung axial nach außen radial vergrößert ist, und dadurch, dass die Beschichtungsschicht weiter einen zweiten Beschichtungsabschnitt (20) beinhaltet, der auf dem sich verjüngenden Innenoberflächenabschnitt (18) abgeschieden ist, um sich an den ersten Beschichtungsabschnitt (19) anzuschließen und die Werkstoffdicke in die Richtung axial nach außen schrittweise erhöht.

2. Pleuelstange für eine Verbrennungskraftmaschine nach Anspruch 1, wobei eine Innenumfangsfläche des zweiten Beschichtungsabschnitts (20) ununterbrochen mit einer Innenumfangsfläche des ersten Beschichtungsabschnitts (19) dergestalt ausgebildet ist, dass sie einen ungefähr konstanten Innendurchmesser hat.

3. Pleuelstange für eine Verbrennungskraftmaschine nach Anspruch 2, wobei die ununterbrochene Innenumfangsfläche des ersten Beschichtungsabschnitts (19) und des zweiten Beschichtungsabschnitts (20) durch Bearbeitung ausgebildet sind, um einen Teil des Beschichtungswerkstoffs zu entfernen.

4. Pleuelstange für eine Verbrennungskraftmaschine nach einem der Ansprüche 1 bis 3, wobei die Beschichtungsschicht (16) einen dritten Beschichtungsabschnitt (21) beinhaltet, der ununterbrochen mit einer axialen Außenseite des zweiten Beschichtungsabschnitts (20) ist und eine Innenumfangsfläche hat, die in die Richtung axial nach außen radial vergrößert ist.

5. Pleuelstange für eine Verbrennungskraftmaschine nach einem der vorstehenden Ansprüche, wobei der sich verjüngende Innenoberflächenabschnitt (18) der Grundwerkstofföffnung (15) eine Durchmesserausdehnungsrate in eine axial äußere Region hat, die größer als eine Durchmesserausdehnungsrate in eine axial innere Region ist.

6. Pleuelstange für eine Verbrennungskraftmaschine nach Anspruch 5, wobei der sich verjüngende Innenoberflächenabschnitt (18) der Grundwerkstofföffnung (15) als eine sich verjüngende Oberfläche mit einer Vielzahl von Stufen ausgebildet ist, in welchen der Verjüngungswinkel in mehreren separaten Stufen geändert wird.

7. Pleuelstange für eine Verbrennungskraftmaschine nach Anspruch 6, wobei:
der sich verjüngende Innenoberflächenabschnitt (18) der Grundwerkstofföffnung (15) einen ersten Verjüngungsabschnitt (18A), der neben einer axial äußeren Seite des zylindrischen Innenoberflächenabschnitts (17) angeordnet ist, und einen zweiten Verjüngungsabschnitt (18B) hat, der neben einer axial äußeren Seite des ersten Verjüngungsabschnitts (18A) angeordnet ist; und
wobei ein Winkel, welchen der zylindrische Innenoberflächenabschnitt (17) mit dem ersten Verjüngungsabschnitt (18A) ausbildet, dergestalt eingestellt ist, dass er größer als ein Winkel ist, welchen der erste Verjüngungsabschnitt (18A) mit dem zweiten Verjüngungsabschnitt (18B) ausbildet.

## Revendications

1. Bielle pour un moteur à combustion interne, comprenant :
un trou de connexion (11) à travers lequel une broche de transmission de puissance (6) est ajustée par coulissement,
le trou de connexion (11) étant formé en revêtant une surface périphérique interne d'un trou de matériau de base (15) formé dans un matériau de base (14) de la bielle d'un matériau de revêtement qui est plus tendre que le matériau de base (14) de la bielle,
dans laquelle le trou de matériau de base (15) inclut :
une partie de surface interne cylindrique (17) avec un diamètre interne constant formée dans une région centrale de façon axiale ; et
dans laquelle la couche de revêtement (16) formée du matériau de revêtement inclut :
une première partie de revêtement (19) déposée sur la partie de surface interne cylindrique (17) et ayant une face interne avec un diamètre interne approximativement constant, **caractérisé en ce que** le trou de matériau de base (15) inclut en outre une partie de surface interne conique (18) qui est continue avec un côté externe de façon axiale de la partie cylindrique interne (17) et s'élargit de façon radiale dans un sens vers l'extérieur de façon axiale et **en ce que** la couche de revêtement inclut en outre une deuxième partie de revêtement (20) déposée sur la partie de surface interne conique (18) pour être contiguë avec la première partie de revêtement (19) et augmenter graduellement l'épaisseur de matériau dans le sens vers l'extérieur de façon axiale.

2. Bielle pour un moteur à combustion interne selon la revendication 1, dans laquelle une face périphérique interne de la deuxième partie de revêtement (20) est formée en continu avec une face périphérique interne de la première partie de revêtement (19) de manière à avoir un diamètre interne approximativement constant.

3. Bielle pour un moteur à combustion interne selon la revendication 2, dans laquelle la face périphérique interne continue de la première partie de revêtement (19) et la deuxième partie de revêtement (20) sont formées par usinage pour éliminer une partie du matériau de revêtement.

4. Bielle pour un moteur à combustion interne selon l'une quelconque des revendications 1 à 3, dans laquelle la couche de revêtement (16) inclut une troisième partie de revêtement (21) continue avec un côté vers l'extérieur de façon axiale de la deuxième partie de revêtement (20) et ayant une face périphérique interne qui s'élargit de façon radiale dans le sens vers l'extérieur de façon axiale.

5. Bielle pour un moteur à combustion interne selon l'une quelconque des revendications précédentes, dans laquelle la partie de surface interne conique (18) du trou de matériau de base (15) a un taux d'expansion diamétral dans une région externe de façon axiale qui est plus grand qu'un taux d'expansion diamétral dans une région interne de façon axiale.

6. Bielle pour un moteur à combustion interne selon la revendication 5, dans laquelle la partie de surface interne conique (18) du trou de matériau de base (15) se présente sous la forme d'une surface conique avec une pluralité d'étages, dans laquelle l'angle de conicité est modifié dans de multiples étages séparés.

7. Bielle pour un moteur à combustion interne selon la revendication 6, dans laquelle :
la partie de surface interne conique (18) du trou de matériau de base (15) a une première partie conique (18A) agencée adjacente à un côté externe de façon axiale de la partie de surface interne cylindrique (17) et une seconde partie conique (18B) agencée adjacente à un côté externe de façon axiale de la première partie conique (18A) ; et
dans lequel un angle que la partie de surface interne cylindrique (17) forme avec la première partie conique (18A) est réglé pour être supérieur à un angle que la première partie conique (18A) forme avec la seconde partie conique (18B).
